(19) 

(11) **EP 4 618 513 B1**

(12) **EUROPEAN PATENT SPECIFICATION**

(45) Date of publication and mention of the grant of the patent:
**12.08.2026 Bulletin 2026/33**

(21) Application number: **24223692.5**

(22) Date of filing: **30.12.2024**

(51) International Patent Classification (IPC):
***H04L 67/02** (2022.01)* ***H04L 9/40** (2022.01)*

(52) Cooperative Patent Classification (CPC):
**H04L 67/02; H04L 63/1416; H04L 63/1425;**
H04L 63/0236; H04L 63/168

(54) **METHOD AND APPARATUS FOR TRAFFIC IDENTIFICATION**

VERFAHREN UND VORRICHTUNG ZUR VERKEHRSIDENTIFIKATION

PROCÉDÉ ET APPAREIL D'IDENTIFICATION DE TRAFIC

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.03.2024 CN 202410275155**

(43) Date of publication of application:
**17.09.2025 Bulletin 2025/38**

(73) Proprietor: **New H3C Security Technologies Co., Ltd.**
**Hefei, Anhui 230088 (CN)**

(72) Inventors:
- **LI, Jian**
  **Beijing, 100102 (CN)**
- **SHI, Ruirui**
  **Beijing, 100102 (CN)**

(74) Representative: **2SPL Patentanwälte PartG mbB**
**Landaubogen 3a**
**81373 München (DE)**

(56) References cited:
**CN-A- 112 583 774** **CN-B- 114 726 579**
**US-A1- 2022 131 885**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 618 513 B1

## Description

### TECHNICAL FIELD

The present disclosure relates to the field of network security technology, particularly to a traffic identification method and apparatus.

### BACKGROUND

In attack paths such as vulnerability exploit attempts and vulnerability probing in network attacks, various hacking tools for rapid discovery and exploitation are utilized to achieve attack objectives. With increasing requirements for network security protection related to grade protection and enhancement of public security awareness, most service providers currently adopt traffic encryption measures such as Hypertext Transfer Protocol Secure (HTTPS), which not only enhances security capabilities but also increases attack costs.

HTTPS traffic employs the Transport Layer Security (TLS) encryption protocol to encrypt transmitted data, with traffic interactions exhibiting non-plaintext and irregular features to prevent information tampering and hijacking. However, traffic encryption is difficult for a defense side to distinguish malicious attack traffic, and the detection capabilities of WAF (Web Application Firewall) and IDS (Intrusion Detection System) devices also struggle to discover malicious attack behaviors hidden within HTTPS traffic. In other words, traditional security protection measures are increasingly inadequate, and the detection of malicious HTTPS attack traffic has become a top priority in security protection.

When identifying HTTP attack traffic, the current detection methods are as follows: One method involves deploying dedicated hardware between the SSL client and server to replace the server in executing SSL handshakes and encryption/decryption tasks, decrypting SSL encrypted traffic into plaintext traffic before subsequent processing. This method requires high-performance equipment to support the aforementioned SSL processing functions, necessitating significant security costs. Another method utilizes machine learning models to perform feature analysis on HTTPS traffic to identify the presence of attacks. However, this method relies on models, and some traffic captured by attackers using hacking tools is primarily focused on information gathering. The behavioral differences between this traffic and normal business traffic are not very obvious, easily leading to a large number of false positives.

Therefore, how to accurately identify HTTPS traffic without incurring significant costs is one of the technical issues worth considering.

CN 114726579 B discloses a method, a device and an equipment for defending network attack, a storage medium and a program product.

US 2022131885 A1 discloses methods for tracing malicious endpoints in direct communication with application back ends using TLS fingerprinting techniques.

CN 112583774 A discloses an attack traffic detection method and a device, a storage medium and an electronic equipment.

### SUMMARY

The present disclosure provides a traffic identification method and apparatus , as defined in the appended independent claims, for accurately identifying HTTPS traffic without requiring significant costs.

The present disclosure provides a traffic identification method.

The method comprises: acquiring HTTPS traffic;
extracting a target feature from the HTTPS traffic based on the positions of attack features in hacking attack traffic;
matching the target feature against first genetic features corresponding to hacking tools incorporated in a fingerprint blacklist database;
identifying the HTTPS traffic as hacking attack traffic in response to a determination that the target features are matched with the first genetic features corresponding to a hacking tool, of said hacking tools, incorporated in said fingerprint blacklist database;
in response to a determination that no first genetic features corresponding to said hacking tools incorporated in said fingerprint blacklist database are matched with the target features, matching the target feature against second genetic features in a tool genetic database to obtain a matching result, wherein the second genetic features in the tool genetic database are obtained by combining the first genetic features of each hacking tool in the fingerprint blacklist database;
identifying the HTTPS traffic as hacking attack traffic when the matching result satisfies a hacking identification condition.

Preferred embodiments are defined by the dependent claims.

The present disclosure further provides a traffic identification apparatus. The apparatus comprises:

an acquiring unit is to acquire HTTPS traffic;

an extracting unit is to extract target feature from the HTTPS traffic based on the positions of attack features in hacking attack traffic;

a first matching unit is to match the target feature against first genetic features corresponding to hacking tools included in a fingerprint blacklist database;

an identifying unit is to identify the HTTPS traffic as hacking attack traffic in response to the first matching unit determining that the first genetic features corresponding to a hacking tool, of said hacking tools, incorporated in said fingerprint blacklist database are matched with the target features;

a second matching unit is to match the target feature against second genetic features in a tool genetic database to obtain a matching result in response to the first matching unit determining that no first genetic features corresponding to said hacking tools incorporated in said fingerprint blacklist database are matched with the target features, wherein the second genetic features in the tool genetic database are obtained by combining the first genetic features of each hacking tool in the fingerprint blacklist database;

the identifying unit is further to identify the HTTPS traffic as hacking attack traffic when the matching result of the second matching unit satisfies a hacking identification condition.

Preferred embodiments are defined by the dependent claims.

Beneficial effects of examples of the present disclosure:

In the traffic identification method and apparatus provided by the examples of the present disclosure, by setting up a fingerprint blacklist database containing first genetic features used to represent hacking tools, accurate identification of whether HTTPS traffic is hacking tool traffic can be achieved when performing feature matching based on the fingerprint blacklist database. Additionally, when no match is found in the fingerprint blacklist database, the present disclosure further provides a tool genetic database, which avoids missing the identification of HTTPS traffic belonging to hacker attacks when performing feature matching based on the tool genetic database. At the same time, adopting the above method eliminates the need to deploy dedicated proxy tools for identifying hacking attack traffic, reducing identification costs. Moreover, compared to machine learning-based traffic identification methods, the occurrence of incomplete detection and false detection is avoided, improving the accuracy of hacking attack traffic identification results.

## BRIEF DESCRIPTION OF THE DRAWINGS

FIG. 1 is a flowchart illustrating a method for traffic identification provided by an example of the present disclosure;
FIG. 2 is a structural diagram of an apparatus for traffic identification provided by an example of the present disclosure;
FIG. 3 is a hardware structural diagram of an electronic device for implementing the method for traffic identification provided by an example of the present disclosure.

## DETAILED DESCRIPTION

Here, exemplary examples will be described in detail, with examples illustrated in the accompanying drawings. Unless otherwise indicated, the same numerals in different drawings represent the same or similar elements. Implementations described in the following exemplary examples do not represent all implementations consistent with the present disclosure. Implementations described in the following exemplary examples are merely examples of apparatus and methods consistent with some examples of the present disclosure.

The terms used in the present disclosure are for the purpose of describing particular examples only and are not intended to limit the present disclosure. The use of the indefinite article "a," "an," and "the" in the singular form in the present disclosure also intends to include the plural form, unless the context clearly indicates otherwise. It should also be understood that the term "and/or" used herein refers to and encompasses any or all possible combinations of one or more of the corresponding listed items.

It should be understood that although terms such as first, second, third, etc., may be used in the present disclosure to describe various information, these terms should not be limited to such terminology. These terms are only

used to distinguish one type of information from another. For example, without departing from the scope of the present disclosure, first information can also be referred to as second information, and similarly, second information can also be referred to as first information. Depending on the context, the word "if" as used herein may be interpreted as "when" or "in response to determining."

Below is a detailed description of the traffic identification method provided by the present disclosure.

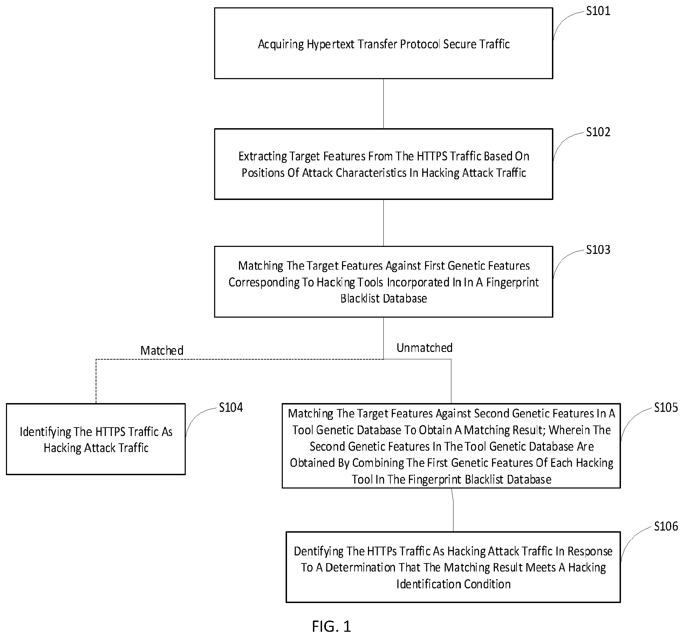

Fig. 1 is a flowchart illustrating a traffic identification method provided by the present disclosure. This traffic identification method can be applied in network security devices, which may include but are not limited to firewalls, security gateways, and other such devices. When implementing this method, the aforementioned network security devices may include the following processes.

S101: Obtaining HTTPS traffic.

In the process S101, the aforementioned network security devices will activate a monitoring function to obtain the aforementioned HTTPS traffic. This HTTPS traffic employs the secure version of the Hyper Text Transfer Protocol (HTTP), using the Transport Layer Security (TLS) protocol to protect data transmission and communication security. HTTPS utilizes encryption technology during transmission, effectively preventing data from being eavesdropped on, tampered with, or hijacked. The TLS protocol is an encryption protocol used to ensure the security and integrity of network communications. TLS is one of the security protocols used by HTTPS. It provides confidentiality, integrity, and authentication for the data. By using encryption algorithms, TLS ensures that the data will not be eavesdropped on or tampered with during transmission. Additionally, TLS uses digital certificates to verify the identity of the server and ensure that users are connecting to legitimate and trusted websites

After hacking tools are launched and proxy function is enabled, the hacking tools will default to locally monitoring specified ports. The specified ports could be connected to by attackers, and when HTTPS websites are accessed later, original HTTPS traffic will be decrypted and encrypted in a form of a man-in-the-middle and then forwarded. Based on this principle, network security devices can monitor the specified port to obtain HTTPS traffic passing through it.

When identifying the aforementioned HTTPS traffic, the HTTPS protocol sessions and session content are extracted for identification. Such an approach helps reduce device matching loss and improve device performance. The aforementioned session content may include five-tuple information, HTTPS negotiation message traffic, and so on.

S102: Extracting target features from the HTTPS traffic based on the positions of attack features in hacking attack traffic.

In process S102, the positions of attack features in hacking attack traffic generally follow a pattern. Therefore, the positions of identified attack features in various hacking attack traffics can be statistically analyzed to obtain possible positions of attack features. Thus, based on the statistical positions, the target features can be extracted from the corresponding positions in the HTTPS traffic. When multiple positions are identified, a target feature can be extracted from the corresponding position in the HTTPS traffic for each position. Accordingly, multiple target features corresponding to the multiple positions can be obtained, and then for each target feature, the processes of processes S103 to S106 are executed separately.

Additionally, classification can be made based on the hacking tools used in the hacking attack traffic. The hacking tools in each identified hacking attack traffic can be identified, specifically using the hacking tool identification methods currently available or the traffic identification method provided in this example. Based on this, the hacking attack traffic corresponding to each hacking tool can be identified, and then the positions of attack features in the hacking attack traffic of each hacking tool can be identified to obtain the positions of attack features corresponding to each hacking tool. Furthermore, based on the positions corresponding to each hacking tool, target features can be extracted from the corresponding positions in the HTTPS traffic. Based on this, a correspondence between hacking tools and target features can be established, for example, by recording the correspondence into a feature table. Then, for the target features corresponding to each hacking tool, the processes of the following processes S103 to S106 are executed separately.

To further improve the traffic identification speed, a union set of the extracted positions can be processed to obtain a target position with a broader range, and then target features can be extracted from the corresponding position in the HTTPS traffic based on this target position.

S103: Matching the target features against the first genetic features corresponding to hacking tools included in a fingerprint blacklist database.

During this process, when matching the target features against the aforementioned fingerprint blacklist database, if multiple target features are extracted based on process S102, then each target feature is matched against the first genetic features corresponding to each hacking tool to obtain a matching result. When each extracted target feature is based on the corresponding hacking tool, i.e., the aforementioned feature table is obtained, then during matching, each target feature in the feature table can be extracted, and the hacking tool corresponding to the target feature can be identified based on the correspondence in the feature table. Then, the target feature is matched against the first genetic features corresponding to the identified hacking tool to obtain a matching result.

When the aforementioned target features are extracted from the HTTPS traffic based on the aforementioned target positions, then during feature matching, the target features can be matched against the first genetic features

corresponding to each hacker attack in the fingerprint blacklist database.

The aforementioned first genetic features may be features that directly characterize a hacking tool. The number of first genetic features corresponding to each hacking tool can be configured based on actual conditions. Furthermore, when multiple first genetic features are required to characterize any hacking tool, the multiple first genetic features corresponding to the hacking tool in the fingerprint blacklist database are in a specific order. Therefore, during feature matching, the target features are matched against the ordered first genetic features sequentially, thereby ensuring the accuracy of traffic identification based on the fingerprint blacklist database.

It should be noted that security operation and maintenance personnel can establish the aforementioned fingerprint blacklist database based on the composition and fields of the HTTPS traffic generated by various hacking tools after encryption using the aforementioned TLS protocol. Moreover, the fingerprint blacklist database can be dynamically updated.

The aforementioned fingerprint blacklist database can include but is not limited to a TLS fingerprint blacklist database. The TLS fingerprint blacklist database can be various default genetic features of various versions of hacking tools in various operating environments preestablished using JA3, JA3S, thereby forming a fingerprint blacklist database with strong features. When performing feature matching based on this fingerprint blacklist, once a match is found in the database, it can be directly determined that the HTTPS traffic belongs to hacking attack traffic.

The first genetic features of hacking tools can include but are not limited to Name, Environment, TLS Version, Cipher Suites, and Extensions. The aforementioned Name is used to indicate the software name and version number of the hacking tool; Environment is used to indicate the operating environment; TLS Version is used to indicate the TLS version; Cipher Suites is used to indicate the cipher suite; and Extensions is used to indicate extension fields. The aforementioned version, cipher suite, and extension fields belong to traffic attack features. Therefore, for each hacking tool, the first genetic features in the hacking tool traffic of each version under various operating environments can be extracted to form various combinations of first genetic features corresponding to the hacking tool. Each combination of first genetic features comprises the traffic attack features of a hacking tool of a certain version in the hacking tool traffic under a certain operating environment, as well as the aforementioned certain version and certain operating environment.

To better understand this example, an example is provided where the first genetic features of hacking tools are the aforementioned five features. Then, the first genetic features of hacking tools included in the fingerprint blacklist database can refer to Table 1. Based on this, once the target features are obtained, the target features can be matched against Table 1 to determine whether a successful match has occurred.

Table1

| | |
|---|---|
| hacking tool 1 | Name1, Environment1, TLS Version1, Cipher Suites1, Extensions1 |
| hacking tool 2 | Name2, Environment1, TLS Version1, Cipher Suites2, Extensions2 |
| hacking tool 2 | Name2, Environment1, TLS Version2, Cipher Suites3, Extensions4 |
| hacking tool 3 | Name2, Environment1, TLS Version1, Cipher Suites4, Extensions4 |
| ...... | ...... |

Process S104: Identifying the HTTPS traffic as hacking attack traffic in response to determining that the target features are matched with first genetic features corresponding to a hacking tool incorporated in in a fingerprint blacklist database.

In this process, when matching the target features against the first genetic features of hacking tools in the fingerprint blacklist database, if the database comprises multiple sets of first genetic features for a hacking tool, the target features are matched one by one against each combination of first genetic features in each set. When a match with any combination of first genetic features is successful, it indicates that the target features hit the first genetic features of the hacking tool. Moreover, since the first genetic features for each hacking tool included in the fingerprint blacklist database are arranged in sequence and can directly characterize the hacking tool, providing strong identification, successful matching allows for the direct identification of the HTTPs traffic as hacker attack traffic. When a match is successful, the HTTPS traffic can be directly determined as hacking attack traffic. At the same time, the hacking tool used by the HTTPS traffic can also be identified. In this way, there is no need to deploy special proxy tools for the identification of hacking attack traffic, reducing the identification cost. Additionally, compared to machine learning traffic identification methods, it avoids incomplete detection and false detection, improving the accuracy of the identification results for hacking attack traffic.

S105: Matching the target features with second genetic features in a tool genetic database to obtain a matching result in response to determining that no match is successful. The second genetic features in the tool genetic database are obtained by combining the first genetic features of each hacking tool in the fingerprint blacklist database.

In this process, when no match is successfully found, it does not necessarily mean that the HTTPS traffic is not

hacking attack traffic. There may be cases where custom deletions have been made to the first genetic features of hacking tools. For example, in practical applications, features such as suites may be added or deleted, resulting in the fingerprint blacklist database not being able to match perfectly. Therefore, to further improve identification accuracy, a tool genetic database is set up. It combines the first genetic features of hacking tools in the aforementioned fingerprint blacklist database (only reflected in quantitative changes, with the sequence remaining unchanged), resulting in genetic sequences (second genetic features) corresponding to various situations of one hacking tool. This makes the number of obtained second genetic features less than the number of first genetic features. For better understanding, the first genetic features of Hacking tool 1 shown in Table 1 are used as an example for illustration. The second genetic features as obtained by combining the corresponding first genetic features of Hacking tool 1 can be referred to as shown in Table 2.

Table 2

| Hacking Tool1 | TLS Version1, Cipher Suites1, Extensions1 |
|---|---|
| Hacking tool1 | TLS Version2, Cipher Suites2, Extensions2 |
| Hacking tool1 | TLS Version3, Cipher Suites3, Extensions3 |
| Hacking tool1 | TLS Version4, Cipher Suites4, Extensions4 |
| ...... | ...... |

It should be noted that the aforementioned TLS Version1 to TLS Version4, etc., represent version values for different versions; Cipher Suites and Extensions contain multiple Ciphers and Extensions, and the number may vary across different versions and environments, leading to different combinations. Additionally, it is worth noting that the aforementioned second genetic features TLS Version1, Cipher Suites1, and Extensions1 are used to represent the features of Hacking tool 1 in various operating environments Environment.

Based on this, when no match is successfully found, the aforementioned tool genetic database can be accessed, and the target features can be matched against the second genetic features of hacking tools in the tool genetic database. It should be noted that when the target features match a hacking tool, it is only necessary to match the target features against the second genetic features under the corresponding hacking tool; if it does not correspond to a hacking tool, the target features are matched against various combinations of second genetic features corresponding to each hacking tool in the tool genetic database. This allows for obtaining the matching result between the target features and the second genetic features.

Process S106. When the matching result meets the hacking identification condition, the HTTPS traffic is identified as hacking attack traffic.

In this process, since the matching in process S105 is based on the target features and the tool genetic database, which covers a wide range of second genetic features, one hacking identification condition is set when identifying traffic based on this tool genetic database. The matching result is then compared with this hacking identification condition. When the condition is met, the aforementioned HTTPS traffic can be confirmed as hacking attack traffic, thereby achieving further identification of HTTPS traffic and avoiding missed identification of HTTPS traffic belonging to hacker attacks.

In implementing the traffic identification method provided by the present disclosure, HTTPS traffic is obtained; target features are extracted from the HTTPS traffic based on the positions of attack features in hacking attack traffic; the target features are matched against the first genetic features corresponding to hacking tools included in the fingerprint blacklist database; when a match is successful, the HTTPS traffic is identified as hacking attack traffic; when no match is successfully found, the target features are matched against the second genetic features in the tool genetic database to obtain a matching result, where the second genetic features in the tool genetic database are obtained by combining the first genetic features of each hacking tool in the fingerprint blacklist database; when the matching result meets the hacking identification condition, the HTTPS traffic is identified as hacking attack traffic. By providing the aforementioned fingerprint blacklist database, which contains first genetic features used to represent hacking tools, accurate identification of whether HTTPS traffic is hacking tool traffic can be achieved based on feature matching against this fingerprint blacklist database. Additionally, when the fingerprint blacklist database is not matched, the present disclosure provides a tool genetic database, which avoids missed identification of HTTPS traffic belonging to hacker attacks when performing feature matching based on this tool genetic database. Meanwhile, using the aforementioned method eliminates the need for deploying specialized proxy tools for identifying hacking attack traffic, reducing identification costs. Moreover, compared to machine learning traffic identification methods, it avoids incomplete detection and false detection, improving the accuracy of hacking attack traffic identification results.

Based on the above example, in this example, process S105 can be executed based on the following process: comparing a target feature sequence composed of target features with genetic feature sequences composed of second genetic features corresponding to each hacking tool, and calculating the similarity between the target feature sequence

and each of the genetic feature sequences; obtaining the highest similarity based on the calculated similarities.

Further, process S106 can be executed based on the following process: when the highest similarity exceeds a similarity threshold, the HTTPS traffic is identified as hacking attack traffic.

Specifically, referring also to Table 2, Hacking tool 1 corresponds to 5 rows of second genetic features, corresponding to 5 genetic feature sequences. The genetic feature sequence formed by the target features is then compared with these 5 genetic feature sequences to calculate 5 similarities. The highest similarity among these 5 similarities can then be obtained. In this way, the aforementioned hacking identification condition can be set as a similarity exceeding a similarity threshold. Based on this, when the highest similarity does indeed exceed the similarity threshold, the aforementioned HTTPS traffic can be directly identified as hacking attack traffic.

Further, in practical applications, there may be cases where the highest similarity is below the similarity threshold, but this does not necessarily mean that the HTTPS traffic is not hacking attack traffic or that it is safe traffic. Therefore, to further identify and process it, one deviation range is set, and based on the deviation range, one similarity range can be obtained, with the maximum value of the similarity range being less than the aforementioned similarity threshold. Based on this, the following process can be used for further identification and processing of HTTPS: when the highest similarity does not exceed the similarity threshold and is within the set similarity range, a probe packet is sent to the sender of the HTTPS traffic using the port and path for monitoring hacking tools; when a response packet based on the probe packet is received from the sender, the HTTPS traffic is identified as hacking attack traffic.

Specifically, when the highest similarity identified is not higher than the similarity threshold, it can be determined whether this highest similarity is within the aforementioned similarity range or whether the difference between the similarity threshold and the highest similarity is within the aforementioned deviation range. When either judgment result is positive, it indicates that the current HTTPS traffic is suspected hacking attack traffic. At this point, to further improve the accuracy of traffic identification, a probe packet can be constructed and sent based on the port and path for monitoring hacking tools. Upon receiving a response packet to this probe packet from the other party, it indicates that the hacking tool has responded to the probe packet, and the HTTPS traffic can then be directly identified as hacking tool traffic.

Further, when no probe packet is received, the HTTPS traffic can be determined to be normal traffic. Alternatively, an alarm can be triggered based on the HTTPS traffic for identification by security operations personnel. When operations personnel identify the HTTPS traffic as hacking attack traffic, the first genetic features of the hacking tool captured by the operations personnel are recorded into the fingerprint blacklist. Correspondingly, second genetic features are obtained by combining the first genetic features of this hacking tool and then recorded into the tool genetic database.

Additionally, when the highest similarity is determined to be not higher than the similarity threshold and is not within the aforementioned similarity range, it can be confirmed that the HTTPS traffic is not hacking attack traffic.

Optionally, in this example, the process of comparing the target feature sequence composed of target features with the genetic feature sequences composed of second genetic features corresponding to each hacking tool to calculate the similarity between the target feature sequence and each of the genetic feature sequences can be executed based on the following method: for each of the genetic feature sequences, the target feature sequence and the genetic feature sequence are compared character by character; the similarity between the target feature sequence and the genetic feature sequence is calculated based on scores corresponding to the comparison results of all of the characters.

Specifically, using Table 2 as an example, taking the second genetic features in the first row of Hacking tool 1 in Table 2 as an example, the second genetic features in the first row are arranged in the order shown in Table 2 to form one genetic feature sequence. Simultaneously, the target features are sequentially arranged to form one target feature sequence. The target feature sequence is then compared with the genetic feature sequence, and the similarity between the target feature sequence and the genetic feature sequence is calculated based on the scores corresponding to the comparison results.

To better understand the present disclosure, an example is provided with the target feature sequence S1 and the genetic feature sequence S2 shown below, respectively. It should be noted that the following example is merely illustrative and does not limit the two feature sequences.

$$S1 = 5,10,10,13,50,16,17,23,35,43,45,51$$

$$S2 = 5,10,11,13,50,17,23,35,43,45,51$$

When performing a character-by-character comparison between the two sequences above, a comparison result for each character can be obtained, allowing the similarity between the two sequences to be calculated based on the scores corresponding to the comparison results. Specifically, the number of characters in the two sequences is different, so there may be three types of matching results during comparison: match, mismatch, and blank. A match indicates that two characters have the same position and value in respective sequences; a mismatch means that two characters have the same position but different values in respective sequences; a blank refers to a situation where the value of a character

in one sequence is the same as the value of a character in another sequence at a position after a certain interval (blank).

Specifically, in sequence alignment, the goal is to find the optimal alignment (roughly referring to maximizing the number of matches and minimizing the number of blanks and mismatches). Based on this, referring to the two sequences S1 and S2 above, it can be seen that the first character in the two sequences matches; the third character in the two sequences mismatches; the sixth character in sequence S2 matches the seventh character in sequence S1, which can be understood as inserting one character 16 in S1 or having one blank before the sixth character in S2, resulting in the following optimal matching sequence:

$$S2' = 5,10,11,13,50,-,17,23,35,43,45,51$$

Based on the optimal matching sequence S2', it can be found that there are 11 matching characters, 1 blank, and 1 mismatching character in S2'. Based on this, the three matching results can be obtained: match, mismatch, and blank; then, the similarity between the two feature sequences can be calculated based on the scores corresponding to all the matching results. For example, the score for a match is 1, the score for a mismatch is -2, and the score for a blank is -1, resulting in a similarity between the two feature sequences of (11 * 1) + (1 * -1) + (1 * -2) = 8.

The specific values of the above scores are merely illustrative and do not limit the specific values of the scores for the matching results. In practical applications, there are many scoring standards for these three scoring situations, and different scoring systems can be designed for different situations. For example, if a blank is considered to be severely disadvantage for alignment, a scoring system that severely penalizes blanks can be used, such as assigning a lower score, etc., which can be configured based on actual situations.

In practical applications, there may be many features to be compared and potentially multiple optimal alignments. Based on this, the present disclosure proposes introducing the Needleman-Wunsch algorithm to calculate similarity. Specifically, the processes of calculating the similarity between the target feature sequence and the genetic feature sequence based on the scores corresponding to the comparison results of the characters can be executed based on the following process: constructing a score matrix based on the scores corresponding to the comparison results of the characters, with the rows and columns of the score matrix corresponding to the target feature sequence and the genetic feature sequence, respectively; the value of each element in the score matrix is determined based on the value of the element at a target position and the scores corresponding to the comparison results of the character corresponding to the row of the target position and the character corresponding to the column of the target position, where the target position comprises the upper-left corner, the left side, and the upper side; traversing the score matrix from the bottom-right corner, following the direction of the element value with the maximum value in the traversal direction; constructing a sub-genetic sequence with the highest match to the target feature sequence based on the characters corresponding to the rows and columns of the traversed elements; calculating the comprehensive score of the sub-genetic sequence based on the scores corresponding to the characters in the sub-genetic sequence; and determining the comprehensive score as the similarity between the target feature sequence and the genetic feature sequence.

Specifically, assuming that the sequence length of the target feature sequence A is n, and the sequence length of the genetic feature sequence B is m, considering the calculation rules for the upper-left corner, the left side, and the upper side, when constructing the initial matrix, an initial matrix with dimensions of n+1 rows and m+1 columns will be created to ensure that the scores of the target feature sequence and the genetic feature sequence in the subsequently obtained score matrix are more informative, thereby ensuring the accuracy of the subsequently obtained similarity.

The values of each element in the first row and first column of the constructed initial matrix above can be set to a specified value. For example, each element in the above initial matrix is denoted as D(i,j). Then, the values of D(1,j) and D(i,1) can be set values, and the values of D(1,j) and D(i,1) can be the same or different.

Based on the above description, the value of each element D(i,j) in the score matrix can be represented by the following formula:

$$D(i,j)=\max\{D(i-1,j)+score(blank),D(i,j-1)+score(blank),D(i-1,j-1)+score(match/mismatch)\}$$

In the aforementioned formula, D(i-1,j) is used to represent the element value of the element in the (i-1)th row and the jth column, and score(blank) is used to represent the score corresponding to a blank position; D(i,j-1) represents the element value of the element in the ith row and the (j-1)th column, D(i-1,j-1) represents the element value of the element in the (i-1)th row and the (j-1)th column, and score(match/mismatch) is used to represent the matching result between the character corresponding to the ith row and the character corresponding to the jth column, such as a match or a mismatch.

Since the elements in the first row and the first column above are all assigned corresponding element values, based on this, by providing the aforementioned formula, the entire matrix can be populated with scores after calculation, thereby obtaining the aforementioned scoring matrix.

To better understand the present disclosure, an example is provided where the target feature sequence A=GGA

corresponds to the rows of the scoring matrix and the gene feature sequence B=GAA corresponds to the columns of the scoring matrix. In this way, the dimension of the initial matrix is 4x4. Assuming that the element values of the elements in the first row of the matrix are 0, -1, -1, -1, respectively, and the element values of the elements in the first column are 0, -1, -1, -1, respectively, the element values of the elements in the initial matrix, excluding the first row and the first column, can be calculated based on the aforementioned formula. Please refer to Table 3 for details:

Table3

| | | G | A | A |
|---|---|---|---|---|
| | 0 | -1 | -1 | -1 |
| G | -1 | 1 | 0 | -1 |
| G | -1 | 0 | -1 | -2 |
| A | -1 | -1 | 1 | 0 |

Taking the example where a score for a match is 1, a score for a mismatch is -2, and a score for a blank is -1, the calculation process for the element value at D(2,2) in the scoring matrix in Table 3 above is as follows:

$$D(2,2) = max\{D(1,2) + score(blank), D(2,1) + score(blank), D(1,1) + score(match/mismatch)\} = max\{-1 - 1, -1 - 1, 0 + 1\} = max\{-2,-2,1\} = 1$$

In this case, a character in a row and a character in a column where D(2,2) is located are both G, indicating a match. Therefore, value of score(match/mismatch) is set to score(match) = 1.

Another example is D(3,3) = max{ D(2,3) + score(blank), D(3,2) + score(blank), D(2,2) + score(match/mismatch)} = max{0 - 1, 0 - 1, 1 - 2} = max{-1, -1, -1} = -1. Here, a character in a row where D(3,3) is located is G, while a characters in a column is A, indicating a mismatch. Therefore, value of score(match/mismatch) is -2.

Based on this, after obtaining the scoring matrix mentioned above, we can traverse the scoring matrix based on the aforementioned method to achieve the purpose of backtracking. Starting from the bottom right corner of the scoring matrix, assuming the element in the i-th row is denoted as ai and the element in the j-th column is denoted as bj, we traverse in the direction of the element with the maximum value among directions of the upper-left corner, the upper side, and the left side. If there are multiple elements with the same maximum value, the traversal priority is determined in the order of upper-left corner, upper side, and left side. This way, we can obtain the sub-gene sequence with the highest matching degree mentioned above. Furthermore, based on the scores corresponding to the characters in the sub-gene sequence, we can calculate the comprehensive score of the sub-gene sequence. When multiple sub-gene sequences are obtained through traversal, the highest comprehensive score is taken as the similarity between the target feature sequence and the gene feature sequence.

Furthermore, when constructing the sub-gene sequence with the highest matching degree to the target feature sequence based on the characters corresponding to the rows and columns of the traversed elements, the following process can be implemented: When the current traversed element is located at the upper-left corner of the previously traversed element's position, the character indicated by the row index of the current traversed element's row in the corresponding feature sequence is added to the first sub-gene sequence, and the character indicated by the column index of the current traversed element's column in the corresponding feature sequence is added to the second sub-gene sequence. The scoring matrix is then continued to be traversed. When the current traversed element is located above the previously traversed element's position, the character indicated by the row index of the current traversed element's row in the corresponding feature sequence is added to the first sub-gene sequence, and a preset character is added to the second sub-gene sequence. The scoring matrix is then continued to be traversed. When the current traversed element is located to the left side of the previously traversed element's position, the preset character is added to the first sub-gene sequence, and the character indicated by the column index of the current traversed element's column in the corresponding feature sequence is added to the second sub-gene sequence. The scoring matrix is then continued to be traversed. When the traversal ends, the first sub-gene sequence and the second sub-gene sequence with the highest matching degree to the target feature sequence are obtained.

Table 3 is an example for illustration. Traversing starts from the element corresponding to a traversal direction with the largest element value in the lower right corner, i.e., starting from D(4,4) in Table 3. There are three traversal directions: left, upper left, and upper, with element values of 1, -1, and -2, respectively. Thus, the largest element value is 1, indicating that traversal starts to the left. The element to the left is D(4,3), and the row index of D(4,3) is determined to be 4 and the column index to be 3. Based on the above description of the sub-gene sequence construction process, the character "_" can be added to the first sub-gene sequence ***A'***, serving as the tail character of ***A'***. Meanwhile, the character A

indicated by column index 3 (b3) in the gene feature sequence is added to the second sub-gene sequence ***B'*,** serving as the tail character of ***B'*.** By continuing to traverse, the traversal direction with the largest element value is upper left, i.e., traversing to D(3,2). The row index of D(3,2) is determined to be 3 and the column index to be 2. Based on the above description, the character A indicated by row index 3 (a3) in the target feature sequence is added to the first sub-gene sequence ***A'*,** positioned before the character "_", while the character A indicated by column index 2 (b2) in the gene feature sequence is added to the second sub-gene sequence ***B'*,** positioned before the previously added character A. By continuing to traverse, the traversal direction with the largest element value is upper, i.e., traversing to D(2,2). Based on the above description, the row index of D(2,2) is determined to be 2. Therefore, the character G indicated by row index 2 (a2) in the target feature sequence is added to the first sub-gene sequence ***A'*,** positioned before the character A, and the character "_" is added to the second sub-gene sequence ***B***', positioned before the character A. By continuing to traverse the scoring matrix, the traversal direction with the largest element value is upper left, i.e., traversing to D(1,1). The row index of D(1,1) is determined to be 1 and the column index to be 1. Based on the above description, the character G indicated by row index 1 (a1) in the target feature sequence is added to the first sub-gene sequence ***A'*,** positioned at the front of the first sub-gene sequence ***A***', and the character G indicated by column index 1 (b1) in the gene feature sequence is added to the second sub-gene sequence ***B'*,** positioned at the front of the second sub-gene sequence ***B***'. The traversal ends, resulting in the following first sub-gene sequence ***A'*** and second sub-gene sequence ***B***':

***A'*** = GGA

***B'* =** G_AA

In practical applications, colors can be used to distinguish the matching results between the characters in each sub-gene sequence and the target feature sequence. For example, black represents a perfect match, red represents an editing operation, and "_" represents insertion or deletion. Alternatively, the characters in the first and second sub-gene sequences can be annotated to indicate the above-mentioned character matching results.

After obtaining the above first and second sub-gene sequences, which are sequences composed of characters matching the target feature sequence, for each sub-gene sequence, a comprehensive score for the sub-gene sequence is calculated based on the scores corresponding to the matching results of the characters in the subsequence. Refer to the similarity calculation method between S1 and S2 mentioned above, and then determine the highest comprehensive score as the above-mentioned similarity. Taking ***A'*** = GGA_ as an example, there are 3 characters matching the target feature sequence ***A*** = GGA, with 1 blank. The score for a match is 1, and the score for a blank is -1. Therefore, the comprehensive score = 31 + 1(-1) = 2.

Thus, by providing the above traffic identification method, it helps to accurately identify whether HTTPS traffic is hacking attack traffic with high accuracy, and this method is versatile. In addition, compared to traditional methods that involve unloading SSL for detection, this method does not require security devices to consume significant performance for unloading and decryption. Compared to bypass detection methods, this method offers faster detection and stronger real-time performance. Furthermore, this disclosure does not require a large amount of data and sufficient eigenvalues, nor does it require extensive model training. It only requires security operations personnel to supplement and optimize the gene library of hacking tools. Compared to machine learning detection methods, the false positive rate is low.

Based on the same inventive concept, the present disclosure also provides a traffic identification apparatus corresponding to the above traffic identification method. The implementation of this traffic identification apparatus can specifically refer to the above description of the traffic identification method and will not be discussed in detail here.

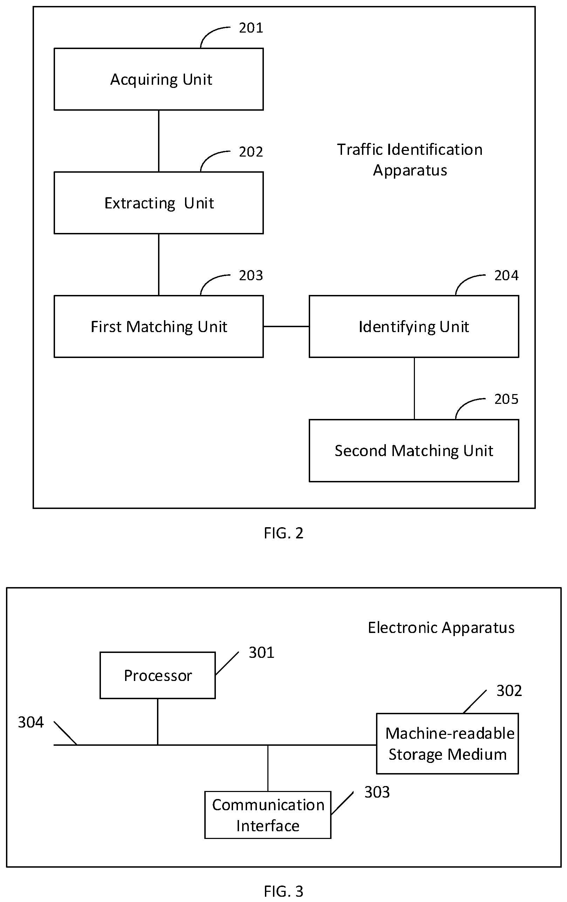

Fig. 2 illustrates an apparatus for traffic identification provided in an exemplary example of the present disclosure, which comprises:

an acquiring unit 201 is to acquire HTTPS traffic;

an extracting unit 202 is to extract target features from the HTTPS traffic based on the positions of attack features in hacking attack traffic;

a first matching unit 203 is to match the target features against first genetic features corresponding to hacking tools included in a fingerprint blacklist database;

an identifying unit 204 is to identify the HTTPS traffic as hacking attack traffic in response to the first matching unit 203 determining that the first genetic features corresponding to a hacking tool incorporated in a fingerprint blacklist database are matched with the target features;

a second matching unit 205 is to match the target features against second genetic features in a tool genetic database

to obtain a matching result in response to the first matching unit 203 determining that no first genetic features corresponding to hacking tools incorporated in a fingerprint blacklist database are matched with the target features, wherein the second genetic features in the tool genetic database are obtained by combining the first genetic features of each hacking tool in the fingerprint blacklist database;

the identifying unit 204 is further to identify the HTTPS traffic as hacking attack traffic when the matching result of the second matching unit meets a hacking identification condition.

By providing a fingerprint blacklist database containing first genetic features representing hacking tools, the present disclosure can accurately identify whether HTTPS traffic is hacking tool traffic based on feature matching with the fingerprint blacklist database. In addition, when the fingerprint blacklist database fails to match, the present disclosure provides a tool genetic database to avoid missing the identification of HTTPS traffic belonging to hacker attacks during feature matching based on the tool genetic database. Meanwhile, adopting the above method does not require deploying dedicated proxy tools for identifying hacking attack traffic, reducing identification costs. Moreover, compared with machine learning traffic identification methods, it avoids incomplete detection and false detection, improving the accuracy of hacking attack traffic identification results.

The second matching unit 205 is further to compare a target feature sequence composed of the target features with genetic feature sequences composed of the second genetic features corresponding to each hacking tool, calculate the similarity between the target feature sequence and each of the genetic feature sequences, to obtain a plurality of similarities for the genetic feature sequences corresponding to a hacking tool in the fingerprint blacklist database; obtain the highest similarity based on the calculated similarities;
the identifying unit 204 is further to identify the HTTPS traffic as hacking attack traffic when the highest similarity exceeds a similarity threshold.

Further, the second matching unit 205 is further to compare the target feature sequence with each of the genetic feature sequences character by character; calculate the similarity between the target feature sequence and the genetic feature sequence based on scores corresponding to comparison results of the characters.

The second matching unit 205 is further to construct a scoring matrix based on scores corresponding to comparison results of the characters, wherein the rows and columns of the scoring matrix correspond to the target feature sequence and the genetic feature sequence, respectively; each element value in the scoring matrix is determined based on the element value at the target position of the element and the score corresponding to the comparison result between the character corresponding to the row of the target position and the character corresponding to the column of the target position, wherein the target position comprises the upper-left corner, the left side, and the upper side; traverse the scoring matrix from the bottom-right corner of the scoring matrix in the direction of the element value with the maximum value in traversal directions; construct a sub-genetic sequence with the highest matching degree with the target feature sequence based on characters corresponding to the rows and columns of traversed elements; calculate a comprehensive score of the sub-genetic sequence based on scores corresponding to the characters in the sub-genetic sequence; and determine the comprehensive score as the similarity between the target feature sequence and the genetic feature sequence.

The second matching unit 205 is further to, when the position of the currently traversed element is the upper-left corner of the position of the previously traversed element, add the character indicated by the row index of the currently traversed element in the corresponding feature sequence to a first sub-genetic sequence, add the character indicated by the column index of the currently traversed element in the corresponding feature sequence to a second sub-genetic sequence; and continue traversing the scoring matrix;

when the position of the currently traversed element is the upper side of the position of the previously traversed element, add the character indicated by the row index of the currently traversed element in the corresponding feature sequence to the first sub-genetic sequence, add a preset character to the second sub-genetic sequence; and continue traversing the scoring matrix;
when the position of the currently traversed element is the left side of the position of the previously traversed element, add the preset character to the first sub-genetic sequence, add the character indicated by the column index of the currently traversed element in the corresponding feature sequence to the second sub-genetic sequence; and continue traversing the scoring matrix;
when the traversal ends, obtain the first sub-genetic sequence and the second sub-genetic sequence with the highest matching degree with the target feature sequence.

In the present disclosure, the apparatus may further include:
a sending unit (not shown in the figure) is to send a probe message to the sender of the HTTPS traffic using ports and paths for monitoring hacking tools when the highest similarity does not exceed the similarity threshold but falls within a set

similarity range;

On this basis, the identifying unit 204 is further to identify the HTTPS traffic as hacking attack traffic when a response message based on the probe message is received from the sender.

Based on the same inventive concept, in an example of the present disclosure, an electronic apparatus, which may be, but is not limited to, the aforementioned network security apparatus. As shown in Fig. 3, the electronic apparatus comprises a processor 301 and a machine-readable storage medium 302. The machine-readable storage medium 302 stores computer programs executable by the processor 301, and the processor 301 is prompted by the computer programs to execute the traffic identification method provided in any example of the present disclosure. In addition, the electronic apparatus further comprises a communication interface 303 and a communication bus 304, wherein the processor 301, the communication interface 303, and the machine-readable storage medium 302 complete communication with each other through the communication bus 304.

The communication bus mentioned in the aforementioned electronic apparatus may be a Peripheral Component Interconnect (PCI) bus or an Extended Industry Standard Architecture (EISA) bus, among others. The communication bus can be divided into an address bus, a data bus, a control bus, and so on. For ease of representation, only one thick line is used in the figure to represent it, but this does not indicate that there is only one bus or one type of bus.

The communication interface is used for communication between the aforementioned electronic apparatus and other devices.

The aforementioned machine-readable storage medium 302 may be a memory, which may include Random Access Memory (RAM), Double Data Rate Synchronous Dynamic Random Access Memory (DDR SRAM), and may also include Non-Volatile Memory (NVM), such as at least one disk memory. The memory may also be at least one storage device located away from the aforementioned processor.

The aforementioned processor may be a general-purpose processor, including a Central Processing Unit (CPU), a Network Processor (NP), among others; the aforementioned processor may also be a Digital Signal Processor (DSP), an Application Specific Integrated Circuit (ASIC), a Field-Programmable Gate Array (FPGA), or other programmable logic devices, discrete gate or transistor logic devices, discrete hardware components.

Furthermore, the present disclosure also provides a machine-readable storage medium storing computer programs that, when invoked and executed by a processor, prompt the processor to execute the method provided in any example of the present disclosure.

For the examples of the electronic apparatus and the machine-readable storage medium, since the method content involved is basically similar to the aforementioned method examples, the description is relatively simple. For relevant details, please refer to the part of the description of the method examples.

In the present disclosure, terms such as first and second are used to distinguish one entity or operation from another entity or operation, and do not necessarily require or imply any such actual relationship or order between these entities or operations. Moreover, the terms "include," "contain," or any other variations thereof are intended to cover non-exclusive inclusion, such that a process, method, article, or apparatus that comprises a series of elements not only comprises those elements, but also comprises other elements not explicitly listed, or further comprises elements inherent to such process, method, article, or apparatus. In the absence of more restrictions, an element defined by the phrase "including a ..." does not exclude the presence of additional identical elements in the process, method, article, or apparatus that comprises the element.

The realization process of the functions and roles of each unit/module in the aforementioned apparatus is detailed specifically in the realization process of the corresponding processes in the aforementioned method, and will not be repeated here.

For the apparatus examples, since the apparatus examples basically correspond to the method examples, please refer to the part of the description of the method examples for relevant details. The described apparatus examples are merely illustrative, and the units/modules described as separate components may or may not be physically separate. The components displayed as units/modules may or may not be physical units/modules, i.e., the components may be located in one place or distributed across multiple network units/modules. Some or all of the units/modules may be selected to achieve the purpose of the present disclosure based on actual needs. Ordinary technicians in the field can understand and implement this without creative effort.

The above descriptions are only preferred examples of the present disclosure and are not used to limit the present disclosure. Any modifications, equivalent substitutions, improvements, etc., made within the spirit and principles of the present disclosure, shall be included within the scope of protection of the present disclosure.

## Claims

1. A method for traffic identification, the method comprising:

(S101) acquiring, Hypertext Transfer Protocol Secure, HTTPs traffic;
(S102) extracting target features from the HTTPS traffic based on positions of attack features in hacking attack traffic;
(S103) matching the target features against first genetic features corresponding to hacking tools incorporated in a fingerprint blacklist database;
(S104) identifying the HTTPS traffic as hacking attack traffic in response to a determination that the target features are matched with the first genetic features corresponding to a hacking tool, of said hacking tools, incorporated in said fingerprint blacklist database;
(S105) matching the target feature against second genetic features in a tool genetic database to obtain a matching result in response to a determination that no first genetic features corresponding to said hacking tools incorporated in said fingerprint blacklist database are matched with the target features, wherein the second genetic features in the tool genetic database are obtained by combining the first genetic features of each hacking tool in the fingerprint blacklist database;
(S106) identifying the HTTPs traffic as hacking attack traffic in response to a determination that the matching result meets a hacking identification condition.

2. The method of claim 1, wherein the matching the target features against the second genetic features in the tool genetic database to obtain a matching result comprises:

comparing a target feature sequence composed of the target features with genetic feature sequences composed of the second genetic features corresponding to each hacking tool, and calculating a similarity between the target feature sequence and each of the genetic feature sequences, to obtain a plurality of similarities for the genetic feature sequences corresponding to a hacking tool in the fingerprint blacklist database;
obtaining a highest similarity based on the calculated similarities;
identifying the HTTPS traffic as hacking attack traffic in response to a determination that the matching result meets the hacking identification condition comprises:
identifying the HTTPS traffic as hacking attack traffic in response to a determination that the highest similarity exceeds a similarity threshold.

3. The method of claim 2, wherein comparing the target feature sequence with the genetic feature sequence to calculate the similarity between the target feature sequence and each of the genetic feature sequences comprises:

for each of the gene feature sequences, comparing the gene feature sequence with the target feature sequence character by character;
calculating a similarity between the target feature sequence and each of the genetic feature sequences based on scores corresponding to character-by-character comparison results of each of the genetic feature sequences.

4. The method of claim 3, wherein calculating a similarity between the target feature sequence and each of the genetic feature sequences based on scores corresponding to character-by-character comparison results of each of the genetic feature sequences comprises:

constructing a scoring matrix based on the scores corresponding to the character-by-character comparison results, wherein rows and columns of the scoring matrix correspond to the target feature sequence and the genetic feature sequence respectively; an element value of a target position of each element in the scoring matrix, and a score corresponding to a comparison result of a character corresponding to a row of an element at the target position and a column of an element at the target position are used for determining an element value of each element in the scoring matrix, wherein the target position of each element in the scoring matrix comprises an upper left corner, a left side, and an upper side;
traversing the scoring matrix from a lower right corner of the scoring matrix in a direction of an element value with a maximum value among traversal directions;
constructing a sub-genetic sequence with a highest matching degree with the target feature sequence based on characters corresponding to rows and columns of traversed elements;
calculating a comprehensive score of the sub-genetic sequence based on scores corresponding to the characters in the sub-genetic sequence;
determining the comprehensive score as the similarity between the target feature sequence and the genetic feature sequence.

5. The method of claim 4, wherein constructing a sub-genetic sequence with the highest matching degree with the target

feature sequence based on characters corresponding to rows and columns of traversed elements comprises:

in response to a determination that a current traversed element is located at an upper left corner of a previously traversed element, adding a character indicated by a row index of a current traversed element in a corresponding feature sequence to a first sub-genetic sequence, and adding a character indicated by a column index of the current traversed element in the corresponding feature sequence to a second sub-genetic sequence; and continuing to traverse the scoring matrix;
in response to a determination that the current traversed element is located at an upper side of the previously traversed element, adding a character indicated by a row index of the current traversed element in the corresponding feature sequence to the first sub-genetic sequence, and adding a preset character to the second sub-genetic sequence; and continuing to traverse the scoring matrix;
in response to a determination that the current traversed element is located to the left of the previously traversed element, adding the preset character to the first sub-genetic sequence, and adding a character indicated by a column index of the current traversed element in the corresponding feature sequence to the second sub-genetic sequence; and continuing traversing the scoring matrix;
in response to a determination that the traversal ends, obtaining the first sub-genetic sequence and the second sub-genetic sequence with the highest matching degree with the target feature sequence.

**6.** The method of claim 2, wherein the method further comprises:

in response to a determination that the highest similarity does not exceed the similarity threshold but is within a set similarity range, sending a probe message to a sender of the HTTPS traffic using ports and paths for monitoring hacking tools;
identifying the HTTPS traffic as hacking attack traffic in response to a determination that a response message based on the probe message is received from the sender.

**7.** An apparatus for traffic identification, comprising:

an acquiring unit (201) is to acquire Hypertext Transfer Protocol Secure, HTTPS, traffic;
an extracting unit (202) is to extract target features from the HTTPS traffic based on positions of attack features in hacking attack traffic;
a first matching unit (203) is to match the target features against first genetic features corresponding to hacking tools incorporated in a fingerprint blacklist database;
an identifying unit (204) is to identify the HTTPS traffic as hacking attack traffic in response to the first matching unit (203) determining that the first genetic features corresponding to a hacking tool, of said hacking tools, incorporated in said fingerprint blacklist database are matched with the target features;
a second matching unit (205) is to match the target features against second genetic features in a tool genetic database to obtain a matching result in response to the first matching unit (203) determining that no first genetic features corresponding to said hacking tools incorporated in said fingerprint blacklist database are matched with the target features, wherein the second genetic features in the tool genetic database are obtained by combining the first genetic features of each hacking tool in the fingerprint blacklist database;
the identifying unit (204) is further to identify the HTTPS traffic as hacking attack traffic in response to determining that the matching result from the second matching unit (205) meets a hacking identification condition.

**8.** The apparatus of claim 7, wherein:

the second matching unit (205) is to compare a target feature sequence composed of the target features with genetic feature sequences composed of the second genetic features corresponding to each hacking tool, calculate a similarity between the target feature sequence and each of the genetic feature sequences, to obtain a plurality of similarities for the genetic feature sequences corresponding to a hacking tool in the fingerprint blacklist database, and obtain a highest similarity based on the calculated similarities;
the identifying unit (204) is to identify the HTTPS traffic as hacking attack traffic in response to a determination that the highest similarity exceeds a similarity threshold.

**9.** The apparatus of claim 8, wherein:
the second matching unit (205) is to for each of the gene feature sequences, compare the gene feature sequence with the target feature sequence character by character, and calculate a similarity between the target feature sequence and each of the genetic feature sequence based on scores corresponding to character-by-character comparison

results of each of the genetic feature sequences.

**10.** The apparatus of claim 7, wherein:

the second matching unit (205) is to construct a scoring matrix based on the scores corresponding to the character-by-character comparison results, wherein rows and columns of the scoring matrix correspond to the target feature sequence and the genetic feature sequence respectively; an element value of a target position of each element in the scoring matrix, and a score corresponding to a comparison result of a character corresponding to a row of an element at the target position and a column of an element at the target position are used for determining an element value of each element in the scoring matrix, wherein the target position comprises an upper left corner, a left side, and an upper side;
the second matching unit (205) is to further to traverse the scoring matrix from a lower right corner of the scoring matrix based on a direction of an element value with the maximum value among traversal directions; construct a sub-genetic sequence with a highest matching degree with the target feature sequence based on characters corresponding to rows and columns of traversed elements; calculate a comprehensive score of the sub-genetic sequence based on scores respectively corresponding to the characters in the sub-genetic sequence; and determine the comprehensive score as the similarity between the target feature sequence and the genetic feature sequence.

**11.** The apparatus of claim 10, wherein:

the second matching unit (205), upon determining that a position of a currently traversed element is located at an upper left corner of a previously traversed element, is to add a character indicated by a row index of a row where the currently traversed element is located in a corresponding feature sequence to a first sub-genetic sequence, add a character indicated by a column index of a column where the currently traversed element is located in the corresponding feature sequence to a second sub-genetic sequence, and continue traversing the scoring matrix;
the second matching unit (205), upon determining that the position of the currently traversed element is located at an upper side of the previously traversed element, is further to add a character indicated by a row index of a row where the currently traversed element is located in the corresponding feature sequence to the first sub-genetic sequence, add a preset character to the second sub-genetic sequence, and continue traversing the scoring matrix;
the second matching unit (205), upon determining that the position of the currently traversed element is located at a left side of the previously traversed element, is further to add a preset character to the first sub-genetic sequence, add a character indicated by a column index of a column where the currently traversed element is located in the corresponding feature sequence to the second sub-genetic sequence, and continue traversing the scoring matrix; the second matching unit (205), upon finishing traversing the score matrix, is further to obtain the first sub-genetic sequence and the second sub-genetic sequence with the highest matching degree with the target feature sequence.

**12.** The apparatus of claim 8, further comprising:

a sending unit is to send a probe message to a sender of the HTTPS traffic using a port and path for monitoring hacking tools in response to a determining that the highest similarity does not exceed the similarity threshold but falls within a set similarity range;
the identifying unit (204) is further to identify the HTTPS traffic as hacking attack traffic in response to a receipt of a response message fed back by the sender based on the probe message.
the identifying unit (204) is further to identify the HTTPS traffic as hacking attack traffic in response to a receipt of a response message fed back by the sender based on the probe message.

## Patentansprüche

**1.** Ein Verfahren zur Verkehrsidentifikation, wobei das Verfahren Folgendes umfasst:

(S101) Erfassen von Hypertext Transfer Protocol Secure-, HTTPs-, Verkehr;
(S102) Extrahieren von Zielmerkmalen aus dem HTTPS-Verkehr basierend auf Positionen von Angriffsmerkmalen in Hacking-Angriffsverkehr;
(S103) Abgleichen der Zielmerkmale mit ersten genetischen Merkmalen, die Hacking-Tools entsprechen, die in

eine Datenbank mit Fingerabdruck-Sperrliste aufgenommen sind;
(S104) Identifizieren des HTTPS-Verkehrs als Hacking-Angriffsverkehr ansprechend auf eine Bestimmung, dass die Zielmerkmale mit den ersten genetischen Merkmalen, die einem Hacking-Tool der Hacking-Tools entsprechen, die in die Datenbank mit Fingerabdruck-Sperrliste aufgenommen sind, abgeglichen sind;
(S105) Abgleichen des Zielmerkmals mit zweiten genetischen Merkmalen in einer genetischen Tool-Datenbank, um ein Abgleichergebnis zu erhalten, ansprechend auf eine Bestimmung, dass keine ersten genetischen Merkmale, die den Hacking-Tools entsprechen, die in die Datenbank mit Fingerabdruck-Sperrliste aufgenommen sind, mit den Zielmerkmalen abgeglichen sind, wobei die zweiten genetischen Merkmale in der genetischen Tool-Datenbank durch Kombinieren der ersten genetischen Merkmale jedes Hacking-Tools in der Datenbank mit Fingerabdruck-Sperrliste erhalten werden;
(S106) Identifizieren des HTTPs-Verkehrs als Hacking-Angriffsverkehr ansprechend auf eine Bestimmung, dass das Abgleichergebnis eine Hacking-Identifikationsbedingung erfüllt.

**2.** Das Verfahren nach Anspruch 1, wobei das Abgleichen der Zielmerkmale mit den zweiten genetischen Merkmalen in der genetischen Tool-Datenbank, um ein Abgleichergebnis zu erhalten, Folgendes umfasst:

Vergleichen einer Zielmerkmalsequenz, die aus den Zielmerkmalen besteht, mit genetischen Merkmalsequenzen, die aus den zweiten genetischen Merkmalen bestehen, die jedem Hacking-Tool entsprechen, und Berechnen einer Ähnlichkeit zwischen der Zielmerkmalsequenz und jeder der genetischen Merkmalsequenzen, um eine Mehrzahl von Ähnlichkeiten für die genetischen Merkmalsequenzen zu erhalten, die einem Hacking-Tool in der Datenbank mit Fingerabdruck-Sperrliste entsprechen;
Erhalten einer höchsten Ähnlichkeit basierend auf den berechneten Ähnlichkeiten;
wobei das Identifizieren des HTTPS-Verkehrs als Hacking-Angriffsverkehr ansprechend auf eine Bestimmung, dass das Abgleichergebnis die Hacking-Identifikationsbedingung erfüllt, Folgendes umfasst:
Identifizieren des HTTPS-Verkehrs als Hacking-Angriffsverkehr ansprechend auf eine Bestimmung, dass die höchste Ähnlichkeit einen Ähnlichkeitsschwellenwert überschreitet.

**3.** Das Verfahren nach Anspruch 2, wobei das Vergleichen der Zielmerkmalsequenz mit der genetischen Merkmalsequenz, um die Ähnlichkeit zwischen der Zielmerkmalsequenz und jeder der genetischen Merkmalsequenzen zu berechnen, Folgendes umfasst:

für jede der Genmerkmalsequenzen, Vergleichen der Genmerkmalsequenz mit der Zielmerkmalsequenz Zeichen für Zeichen;
Berechnen einer Ähnlichkeit zwischen der Zielmerkmalsequenz und jeder der genetischen Merkmalsequenzen basierend auf Bewertungen, die Zeichen-für-Zeichen-Vergleichsergebnissen jeder der genetischen Merkmalsequenzen entsprechen.

**4.** Das Verfahren nach Anspruch 3, wobei das Berechnen einer Ähnlichkeit zwischen der Zielmerkmalsequenz und jeder der genetischen Merkmalsequenzen basierend auf Bewertungen, die Zeichen-für-Zeichen-Vergleichsergebnissen jeder der genetischen Merkmalsequenzen entsprechen, Folgendes umfasst:

Konstruieren einer Bewertungsmatrix basierend auf den Bewertungen, die den Zeichen-für-Zeichen-Vergleichsergebnissen entsprechen, wobei Zeilen und Spalten der Bewertungsmatrix der Zielmerkmalsequenz und/oder der genetischen Merkmalsequenz entsprechen; ein Elementwert einer Zielposition jedes Elements in der Bewertungsmatrix und eine Bewertung, die einem Vergleichsergebnis eines Zeichens entspricht, das einer Zeile eines Elements an der Zielposition und einer Spalte eines Elements an der Zielposition entspricht, werden zum Bestimmen eines Elementwerts jedes Elements in der Bewertungsmatrix verwendet, wobei die Zielposition jedes Elements in der Bewertungsmatrix eine obere linke Ecke, eine linke Seite und eine obere Seite umfasst;
Durchlaufen der Bewertungsmatrix von einer unteren rechten Ecke der Bewertungsmatrix in einer Richtung eines Elementwerts mit einem Maximalwert unter Durchlaufrichtungen;
Konstruieren einer subgenetischen Sequenz mit einem höchsten Abgleichsgrad mit der Zielmerkmalsequenz basierend auf Zeichen, die Zeilen und Spalten durchlaufener Elemente entsprechen;
Berechnen einer umfassenden Bewertung der subgenetischen Sequenz basierend auf Bewertungen, die den Zeichen in der subgenetischen Sequenz entsprechen;
Bestimmen der umfassenden Bewertung als die Ähnlichkeit zwischen der Zielmerkmalsequenz und der genetischen Merkmalsequenz.

**5.** Das Verfahren nach Anspruch 4, wobei das Konstruieren einer subgenetischen Sequenz mit dem höchsten Ab-

gleichsgrad mit der Zielmerkmalsequenz basierend auf Zeichen, die Zeilen und Spalten durchlaufener Elemente entsprechen, Folgendes umfasst:

ansprechend auf eine Bestimmung, dass sich ein aktuell durchlaufenes Element an einer oberen linken Ecke eines zuvor durchlaufenen Elements befindet, Hinzufügen eines Zeichens, das durch einen Zeilenindex eines aktuell durchlaufenen Elements in einer entsprechenden Merkmalsequenz angezeigt wird, zu einer ersten subgenetischen Sequenz und Hinzufügen eines Zeichens, das durch einen Spaltenindex des aktuell durchlaufenen Elements in der entsprechenden Merkmalsequenz angezeigt wird, zu einer zweiten subgenetischen Sequenz; und Fortsetzen des Durchlaufens der Bewertungsmatrix;
ansprechend auf eine Bestimmung, dass sich das aktuell durchlaufene Element an einer oberen Seite des zuvor durchlaufenen Elements befindet, Hinzufügen eines Zeichens, das durch einen Zeilenindex des aktuell durchlaufenen Elements in der entsprechenden Merkmalsequenz angezeigt wird, zu der ersten subgenetischen Sequenz und Hinzufügen eines voreingestellten Zeichens zu der zweiten subgenetischen Sequenz; und Fortsetzen des Durchlaufens der Bewertungsmatrix;
ansprechend auf eine Bestimmung, dass sich das aktuell durchlaufene Element links von dem zuvor durchlaufenen Element befindet, Hinzufügen des voreingestellten Zeichens zu der ersten subgenetischen Sequenz und Hinzufügen eines Zeichens, das durch einen Spaltenindex des aktuell durchlaufenen Elements in der entsprechenden Merkmalsequenz angezeigt wird, zu der zweiten subgenetischen Sequenz; und Fortsetzen des Durchlaufens der Bewertungsmatrix;
ansprechend auf eine Bestimmung, dass das Durchlaufen endet, Erhalten der ersten subgenetischen Sequenz und der zweiten subgenetischen Sequenz mit dem höchsten Abgleichsgrad mit der Zielmerkmalsequenz.

**6.** Das Verfahren nach Anspruch 2, wobei das Verfahren ferner Folgendes umfasst:

ansprechend auf eine Bestimmung, dass die höchste Ähnlichkeit den Ähnlichkeitsschwellenwert nicht überschreitet, aber innerhalb eines festgelegten Ähnlichkeitsbereichs liegt, Senden einer Prüfnachricht an einen Absender des HTTPS-Verkehrs unter Verwendung von Ports und Pfaden zum Überwachen von Hacking-Tools;
Identifizieren des HTTPS-Verkehrs als Hacking-Angriffsverkehr ansprechend auf eine Bestimmung, dass eine Antwortnachricht basierend auf der Prüfnachricht von dem Absender empfangen wird.

**7.** Eine Vorrichtung zur Verkehrsidentifikation, die Folgendes umfasst:

eine Erfassungseinheit (201), die ausgebildet ist zum Erfassen von Hypertext Transfer Protocol Secure-, HTTPS-, Verkehr;
eine Extraktionseinheit (202), die ausgebildet ist zum Extrahieren von Zielmerkmalen aus dem HTTPS-Verkehr basierend auf Positionen von Angriffsmerkmalen in Hacking-Angriffsverkehr;
eine erste Abgleicheinheit (203), die ausgebildet ist zum Abgleichen der Zielmerkmale mit ersten genetischen Merkmalen, die Hacking-Tools entsprechen, die in eine Datenbank mit Fingerabdruck-Sperrliste aufgenommen sind;
eine Identifizierungseinheit (204), die ausgebildet ist zum Identifizieren des HTTPS-Verkehrs als Hacking-Angriffsverkehr ansprechend darauf, dass die erste Abgleicheinheit (203) bestimmt, dass die ersten genetischen Merkmale, die einem Hacking-Tool der Hacking-Tools entsprechen, die in die Datenbank mit Fingerabdruck-Sperrliste aufgenommen sind, mit den Zielmerkmalen abgeglichen sind;
eine zweite Abgleicheinheit (205), die ausgebildet ist zum Abgleichen der Zielmerkmale mit zweiten genetischen Merkmalen in einer genetischen Tool-Datenbank, um ein Abgleichergebnis zu erhalten, ansprechend darauf, dass die erste Abgleicheinheit (203) bestimmt, dass keine ersten genetischen Merkmale, die den Hacking-Tools entsprechen, die in die Datenbank mit Fingerabdruck-Sperrliste aufgenommen sind, mit den Zielmerkmalen abgeglichen sind, wobei die zweiten genetischen Merkmale in der genetischen Tool-Datenbank durch Kombinieren der ersten genetischen Merkmale jedes Hacking-Tools in der Datenbank mit Fingerabdruck-Sperrliste erhalten werden;
wobei die Identifizierungseinheit (204) ferner ausgebildet ist zum Identifizieren des HTTPS-Verkehrs als Hacking-Angriffsverkehr ansprechend auf eine Bestimmung, dass das Abgleichergebnis der zweiten Abgleicheinheit (205) eine Hacking-Identifikationsbedingung erfüllt.

**8.** Die Vorrichtung nach Anspruch 7, wobei:

die zweite Abgleicheinheit (205) ausgebildet ist zum Vergleichen einer Zielmerkmalsequenz, die aus den Zielmerkmalen besteht, mit genetischen Merkmalsequenzen, die aus den zweiten genetischen Merkmalen

bestehen, die jedem Hacking-Tool entsprechen, zum Berechnen einer Ähnlichkeit zwischen der Zielmerkmalsequenz und jeder der genetischen Merkmalsequenzen, um eine Mehrzahl von Ähnlichkeiten für die genetischen Merkmalsequenzen zu erhalten, die einem Hacking-Tool in der Datenbank mit Fingerabdruck-Sperrliste entsprechen, und zum Erhalten einer höchsten Ähnlichkeit basierend auf den berechneten Ähnlichkeiten;
wobei die Identifizierungseinheit (204) ausgebildet ist zum Identifizieren des HTTPS-Verkehrs als Hacking-Angriffsverkehr ansprechend auf eine Bestimmung, dass die höchste Ähnlichkeit einen Ähnlichkeitsschwellenwert überschreitet.

**9.** Die Vorrichtung nach Anspruch 8, wobei:
die zweite Abgleicheinheit (205) ausgebildet ist, für jede der Genmerkmalsequenzen, zum Vergleichen der Genmerkmalsequenz mit der Zielmerkmalsequenz Zeichen für Zeichen und zum Berechnen einer Ähnlichkeit zwischen der Zielmerkmalsequenz und jeder der genetischen Merkmalsequenzen basierend auf Bewertungen, die Zeichen-für-Zeichen-Vergleichsergebnissen jeder der genetischen Merkmalsequenzen entsprechen.

**10.** Die Vorrichtung nach Anspruch 7, wobei:

die zweite Abgleicheinheit (205) ausgebildet ist zum Konstruieren einer Bewertungsmatrix basierend auf den Bewertungen, die den Zeichen-für-Zeichen-Vergleichsergebnissen entsprechen, wobei Zeilen und Spalten der Bewertungsmatrix der Zielmerkmalsequenz und/oder der genetischen Merkmalsequenz entsprechen; ein Elementwert einer Zielposition jedes Elements in der Bewertungsmatrix und eine Bewertung, die einem Vergleichsergebnis eines Zeichens entspricht, das einer Zeile eines Elements an der Zielposition und einer Spalte eines Elements an der Zielposition entspricht, werden zum Bestimmen eines Elementwerts jedes Elements in der Bewertungsmatrix verwendet, wobei die Zielposition eine obere linke Ecke, eine linke Seite und eine obere Seite umfasst;
die zweite Abgleicheinheit (205) ferner ausgebildet ist zum Durchlaufen der Bewertungsmatrix von einer unteren rechten Ecke der Bewertungsmatrix basierend auf einer Richtung eines Elementwerts mit dem Maximalwert unter Durchlaufrichtungen; zum Konstruieren einer subgenetischen Sequenz mit einem höchsten Abgleichsgrad mit der Zielmerkmalsequenz basierend auf Zeichen, die Zeilen und Spalten durchlaufener Elemente entsprechen; zum Berechnen einer umfassenden Bewertung der subgenetischen Sequenz basierend auf Bewertungen, die jeweils den Zeichen in der subgenetischen Sequenz entsprechen; und zum Bestimmen der umfassenden Bewertung als die Ähnlichkeit zwischen der Zielmerkmalsequenz und der genetischen Merkmalsequenz.

**11.** Die Vorrichtung nach Anspruch 10, wobei:

die zweite Abgleicheinheit (205), wenn bestimmt wird, dass sich eine Position eines aktuell durchlaufenen Elements an einer oberen linken Ecke eines zuvor durchlaufenen Elements befindet, ausgebildet ist zum Hinzufügen eines Zeichens, das durch einen Zeilenindex einer Zeile angezeigt wird, in der sich das aktuell durchlaufene Element in einer entsprechenden Merkmalsequenz befindet, zu einer ersten subgenetischen Sequenz, zum Hinzufügen eines Zeichens, das durch einen Spaltenindex einer Spalte angezeigt wird, in der sich das aktuell durchlaufene Element in der entsprechenden Merkmalsequenz befindet, zu einer zweiten subgenetischen Sequenz und zum Fortsetzen des Durchlaufens der Bewertungsmatrix;
die zweite Abgleicheinheit (205), wenn bestimmt wird, dass sich die Position des aktuell durchlaufenen Elements an einer oberen Seite des zuvor durchlaufenen Elements befindet, ferner ausgebildet ist zum Hinzufügen eines Zeichens, das durch einen Zeilenindex einer Zeile angezeigt wird, in der sich das aktuell durchlaufene Element in der entsprechenden Merkmalsequenz befindet, zu der ersten subgenetischen Sequenz, zum Hinzufügen eines voreingestellten Zeichens zu der zweiten subgenetischen Sequenz und zum Fortsetzen des Durchlaufens der Bewertungsmatrix;
die zweite Abgleicheinheit (205), wenn bestimmt wird, dass sich die Position des aktuell durchlaufenen Elements an einer linken Seite des zuvor durchlaufenen Elements befindet, ferner ausgebildet ist zum Hinzufügen eines voreingestellten Zeichens zu der ersten subgenetischen Sequenz, zum Hinzufügen eines Zeichens, das durch einen Spaltenindex einer Spalte angezeigt wird, in der sich das aktuell durchlaufene Element in der entsprechenden Merkmalsequenz befindet, zu der zweiten subgenetischen Sequenz und zum Fortsetzen des Durchlaufens der Bewertungsmatrix; die zweite Abgleicheinheit (205), wenn das Durchlaufen der Bewertungsmatrix beendet wird, ferner ausgebildet ist zum Erhalten der ersten subgenetischen Sequenz und der zweiten subgenetischen Sequenz mit dem höchsten Abgleichsgrad mit der Zielmerkmalsequenz.

**12.** Die Vorrichtung nach Anspruch 8, die ferner Folgendes umfasst:

eine Sendeeinheit, die ausgebildet ist zum Senden einer Prüfnachricht an einen Absender des HTTPS-Verkehrs unter Verwendung eines Ports und Pfads zum Überwachen von Hacking-Tools ansprechend auf eine Bestimmung, dass die höchste Ähnlichkeit den Ähnlichkeitsschwellenwert nicht überschreitet, aber innerhalb eines festgelegten Ähnlichkeitsbereichs liegt;
wobei die Identifizierungseinheit (204) ferner ausgebildet ist zum Identifizieren des HTTPS-Verkehrs als Hacking-Angriffsverkehr ansprechend auf einen Empfang einer Antwortnachricht, die von dem Absender basierend auf der Prüfnachricht zurückgemeldet wird.
wobei die Identifizierungseinheit (204) ferner ausgebildet ist zum Identifizieren des HTTPS-Verkehrs als Hacking-Angriffsverkehr ansprechend auf einen Empfang einer Antwortnachricht, die von dem Absender basierend auf der Prüfnachricht zurückgemeldet wird.

## Revendications

**1.** Procédé d'identification de trafic, le procédé comprenant le fait de :

(S101) acquérir un trafic de protocole de transfert hypertexte sécurisé, HTTPs ;
(S102) extraire des caractéristiques cibles du trafic HTTPS sur la base de positions de caractéristiques d'attaque dans un trafic d'attaque de piratage ;
(S103) mettre en correspondance les caractéristiques cibles avec des premières caractéristiques génétiques correspondant à des outils de piratage incorporés dans une base de données de liste noire d'empreintes digitales ;
(S104) identifier le trafic HTTPS en tant que trafic d'attaque de piratage en réponse à une détermination que les caractéristiques cibles sont mises en correspondance avec les premières caractéristiques génétiques correspondant à un outil de piratage, parmi lesdits outils de piratage, incorporés dans ladite base de données de liste noire d'empreintes digitales ;
(S105) mettre en correspondance la caractéristique cible avec des secondes caractéristiques génétiques dans une base de données de génétique d'outil pour obtenir un résultat de mise en correspondance en réponse à une détermination qu'aucune première caractéristique génétique correspondant auxdits outils de piratage incorporés dans ladite base de données de liste noire d'empreintes digitales n'est mise en correspondance avec les caractéristiques cibles, dans lequel les secondes caractéristiques génétiques dans la base de données de génétique d'outil sont obtenues en combinant les premières caractéristiques génétiques de chaque outil de piratage dans la base de données de liste noire d'empreintes digitales ;
(S106) identifier le trafic HTTPs en tant que trafic d'attaque de piratage en réponse à une détermination que le résultat de mise en correspondance satisfait une condition d'identification de piratage.

**2.** Procédé selon la revendication 1, dans lequel la mise en correspondance des caractéristiques cibles avec les secondes caractéristiques génétiques dans la base de données de génétique d'outil pour obtenir un résultat de mise en correspondance comprend le fait de :

comparer une séquence de caractéristiques cibles composée des caractéristiques cibles avec des séquences de caractéristiques génétiques composées des secondes caractéristiques génétiques correspondant à chaque outil de piratage, et calculer une similarité entre la séquence de caractéristiques cibles et chacune des séquences de caractéristiques génétiques, pour obtenir une pluralité de similarités pour les séquences de caractéristiques génétiques correspondant à un outil de piratage dans la base de données de liste noire d'empreintes digitales ;
obtenir une similarité la plus élevée sur la base des similarités calculées ;
identifier le trafic HTTPS en tant que trafic d'attaque de piratage en réponse à une détermination que le résultat de mise en correspondance satisfait la condition d'identification de piratage comprend le fait de :
identifier le trafic HTTPS en tant que trafic d'attaque de piratage en réponse à une détermination que la similarité la plus élevée dépasse un seuil de similarité.

**3.** Procédé selon la revendication 2, dans lequel le fait de comparer la séquence de caractéristiques cibles avec la séquence de caractéristiques génétiques pour calculer la similarité entre la séquence de caractéristiques cibles et chacune des séquences de caractéristiques génétiques comprend le fait de :

pour chacune des séquences de caractéristiques génétiques, comparer la séquence de caractéristiques génétiques avec la séquence de caractéristiques cibles caractère par caractère ;
calculer une similarité entre la séquence de caractéristiques cibles et chacune des séquences de caractéristi-

ques génétiques sur la base de notes correspondant à des résultats de comparaison caractère par caractère de chacune des séquences de caractéristiques génétiques.

**4.** Procédé selon la revendication 3, dans lequel le fait de calculer une similarité entre la séquence de caractéristiques cibles et chacune des séquences de caractéristiques génétiques sur la base de notes correspondant à des résultats de comparaison caractère par caractère de chacune des séquences de caractéristiques génétiques comprend le fait de :

construire une matrice de notation sur la base des notes correspondant aux résultats de comparaison caractère par caractère, dans lequel des rangées et des colonnes de la matrice de notation correspondent respectivement à la séquence de caractéristiques cibles et à la séquence de caractéristiques génétiques ; une valeur d'élément d'une position cible de chaque élément dans la matrice de notation, et une note correspondant à un résultat de comparaison d'un caractère correspondant à une rangée d'un élément à la position cible et à une colonne d'un élément à la position cible sont utilisées pour déterminer une valeur d'élément de chaque élément dans la matrice de notation, dans lequel la position cible de chaque élément dans la matrice de notation comprend un coin supérieur gauche, un côté gauche, et un côté supérieur;
traverser la matrice de notation à partir d'un coin inférieur droit de la matrice de notation dans une direction d'une valeur d'élément avec une valeur maximale parmi des directions de traversée ;
construire une séquence sous-génétique avec un degré de correspondance le plus élevé avec la séquence de caractéristiques cibles sur la base de caractères correspondant à des rangées et des colonnes d'éléments traversés ;
calculer une note complète de la séquence sous-génétique sur la base de notes correspondant aux caractères dans la séquence sous-génétique ;
déterminer la note complète en tant que similarité entre la séquence de caractéristiques cibles et la séquence de caractéristiques génétiques.

**5.** Procédé selon la revendication 4, dans lequel le fait de construire une séquence sous-génétique avec le degré de correspondance le plus élevé avec la séquence de caractéristiques cibles sur la base de caractères correspondant à des rangées et des colonnes d'éléments traversés comprend le fait de :

en réponse à une détermination qu'un élément traversé actuel est situé à un coin supérieur gauche d'un élément traversé précédemment, ajouter un caractère indiqué par un indice de rangée d'un élément traversé actuel dans une séquence de caractéristiques correspondante à une première séquence sous-génétique, et ajouter un caractère indiqué par un indice de colonne de l'élément traversé actuel dans la séquence de caractéristiques correspondante à une seconde séquence sous-génétique ; et continuer à traverser la matrice de notation ;
en réponse à une détermination que l'élément traversé actuel est situé à un côté supérieur de l'élément traversé précédemment, ajouter un caractère indiqué par un indice de rangée de l'élément traversé actuel dans la séquence de caractéristiques correspondante à la première séquence sous-génétique, et ajouter un caractère prédéfini à la seconde séquence sous-génétique ; et continuer à traverser la matrice de notation ;
en réponse à une détermination que l'élément traversé actuel est situé à gauche de l'élément traversé précédemment, ajouter le caractère prédéfini à la première séquence sous-génétique, et ajouter un caractère indiqué par un indice de colonne de l'élément traversé actuel dans la séquence de caractéristiques correspondante à la seconde séquence sous-génétique ; et continuer à traverser la matrice de notation ;
en réponse à une détermination que la traversée se termine, obtenir la première séquence sous-génétique et la seconde séquence sous-génétique avec le degré de correspondance le plus élevé avec la séquence de caractéristiques cibles.

**6.** Procédé selon la revendication 2, dans lequel le procédé comprend en outre le fait de :

en réponse à une détermination que la similarité la plus élevée ne dépasse pas le seuil de similarité mais est dans une plage de similarité définie, envoyer un message de sonde à un expéditeur du trafic HTTPS en utilisant des ports et des chemins pour surveiller des outils de piratage ;
identifier le trafic HTTPS en tant que trafic d'attaque de piratage en réponse à une détermination qu'un message de réponse basé sur le message de sonde est reçu de l'expéditeur.

**7.** Appareil d'identification de trafic, comprenant :

une unité d'acquisition (201) configurée à acquérir un trafic de protocole de transfert hypertexte sécurisé,

HTTPS ;
une unité d'extraction (202) configurée à extraire des caractéristiques cibles du trafic HTTPS sur la base de positions de caractéristiques d'attaque dans un trafic d'attaque de piratage ;
une première unité de mise en correspondance (203) configurée à mettre en correspondance les caractéristiques cibles avec des premières caractéristiques génétiques correspondant à des outils de piratage incorporés dans une base de données de liste noire d'empreintes digitales;
une unité d'identification (204) configurée à identifier le trafic HTTPS en tant que trafic d'attaque de piratage en réponse à la première unité de mise en correspondance (203) déterminant que les premières caractéristiques génétiques correspondant à un outil de piratage, parmi lesdits outils de piratage, incorporés dans ladite base de données de liste noire d'empreintes digitales sont mises en correspondance avec les caractéristiques cibles ;
une seconde unité de mise en correspondance (205) configurée à mettre en correspondance les caractéristiques cibles avec des secondes caractéristiques génétiques dans une base de données de génétique d'outil pour obtenir un résultat de mise en correspondance en réponse à la première unité de mise en correspondance (203) déterminant qu'aucune première caractéristique génétique correspondant auxdits outils de piratage incorporés dans ladite base de données de liste noire d'empreintes digitales n'est mise en correspondance avec les caractéristiques cibles, dans lequel les secondes caractéristiques génétiques dans la base de données de génétique d'outil sont obtenues en combinant les premières caractéristiques génétiques de chaque outil de piratage dans la base de données de liste noire d'empreintes digitales ;
l'unité d'identification (204) est en outre configurée à identifier le trafic HTTPS en tant que trafic d'attaque de piratage en réponse à la détermination que le résultat de mise en correspondance provenant de la seconde unité de mise en correspondance (205) satisfait une condition d'identification de piratage.

**8.** Appareil selon la revendication 7, dans lequel :

la seconde unité de mise en correspondance (205) est configurée à comparer une séquence de caractéristiques cibles composée des caractéristiques cibles avec des séquences de caractéristiques génétiques composées des secondes caractéristiques génétiques correspondant à chaque outil de piratage, à calculer une similarité entre la séquence de caractéristiques cibles et chacune des séquences de caractéristiques génétiques, à obtenir une pluralité de similarités pour les séquences de caractéristiques génétiques correspondant à un outil de piratage dans la base de données de liste noire d'empreintes digitales, et à obtenir une similarité la plus élevée sur la base des similarités calculées ;
l'unité d'identification (204) est configurée à identifier le trafic HTTPS en tant que trafic d'attaque de piratage en réponse à une détermination que la similarité la plus élevée dépasse un seuil de similarité.

**9.** Appareil selon la revendication 8, dans lequel :
la seconde unité de mise en correspondance (205) est configurée, pour chacune des séquences de caractéristiques génétiques, à comparer la séquence de caractéristiques génétiques avec la séquence de caractéristiques cibles caractère par caractère, et à calculer une similarité entre la séquence de caractéristiques cibles et chacune des séquences de caractéristiques génétiques sur la base de notes correspondant à des résultats de comparaison caractère par caractère de chacune des séquences de caractéristiques génétiques.

**10.** Appareil selon la revendication 7, dans lequel :

la seconde unité de mise en correspondance (205) est configurée à construire une matrice de notation sur la base des notes correspondant aux résultats de comparaison caractère par caractère, dans lequel des rangées et des colonnes de la matrice de notation correspondent respectivement à la séquence de caractéristiques cibles et à la séquence de caractéristiques génétiques ; une valeur d'élément d'une position cible de chaque élément dans la matrice de notation, et une note correspondant à un résultat de comparaison d'un caractère correspondant à une rangée d'un élément à la position cible et à une colonne d'un élément à la position cible sont utilisées pour déterminer une valeur d'élément de chaque élément dans la matrice de notation, dans lequel la position cible comprend un coin supérieur gauche, un côté gauche, et un côté supérieur;
la seconde unité de mise en correspondance (205) est configurée en outre à traverser la matrice de notation à partir d'un coin inférieur droit de la matrice de notation sur la base d'une direction d'une valeur d'élément avec la valeur maximale parmi des directions de traversée ; à construire une séquence sous-génétique avec un degré de correspondance le plus élevé avec la séquence de caractéristiques cibles sur la base de caractères correspondant à des rangées et des colonnes d'éléments traversés ; à calculer une note complète de la séquence sous-génétique sur la base de notes correspondant respectivement aux caractères dans la séquence sous-génétique ; et à déterminer la note complète en tant que similarité entre la séquence de caractéristiques cibles et la séquence

de caractéristiques génétiques.

**11.** Appareil selon la revendication 10, dans lequel :

la seconde unité de mise en correspondance (205), lors de la détermination qu'une position d'un élément traversé actuellement est situé à un coin supérieur gauche d'un élément traversé précédemment, est configurée à ajouter un caractère indiqué par un indice de rangée d'une rangée où l'élément traversé actuellement est situé dans une séquence de caractéristiques correspondante à une première séquence sous-génétique, à ajouter un caractère indiqué par un indice de colonne d'une colonne où l'élément traversé actuellement est situé dans la séquence de caractéristiques correspondante à une seconde séquence sous-génétique, et à continuer à traverser la matrice de notation ;
la seconde unité de mise en correspondance (205), lors de la détermination que la position de l'élément traversé actuellement est situé à un côté supérieur de l'élément traversé précédemment, est en outre configurée à ajouter un caractère indiqué par un indice de rangée d'une rangée où l'élément traversé actuellement est situé dans la séquence de caractéristiques correspondante à la première séquence sous-génétique, à ajouter un caractère prédéfini à la seconde séquence sous-génétique, et à continuer à traverser la matrice de notation ;
la seconde unité de mise en correspondance (205), lors de la détermination que la position de l'élément traversé actuellement est situé à un côté gauche de l'élément traversé précédemment, est en outre configurée à ajouter un caractère prédéfini à la première séquence sous-génétique, à ajouter un caractère indiqué par un indice de colonne d'une colonne où l'élément traversé actuellement est situé dans la séquence de caractéristiques correspondante à la seconde séquence sous-génétique, et à continuer à traverser la matrice de notation ; la seconde unité de mise en correspondance (205), lors de la fin de la traversée de la matrice de notation, est en outre configurée à obtenir la première séquence sous-génétique et la seconde séquence sous-génétique avec le degré de correspondance le plus élevé avec la séquence de caractéristiques cibles.

**12.** Appareil selon la revendication 8, comprenant en outre :

une unité d'envoi configurée à envoyer un message de sonde à un expéditeur du trafic HTTPS en utilisant un port et un chemin pour surveiller des outils de piratage en réponse à une détermination que la similarité la plus élevée ne dépasse pas le seuil de similarité mais est dans une plage de similarité définie ;
l'unité d'identification (204) est en outre configurée à identifier le trafic HTTPS en tant que trafic d'attaque de piratage en réponse à une réception d'un message de réponse renvoyé par l'expéditeur sur la base du message de sonde.
l'unité d'identification (204) est en outre configurée à identifier le trafic HTTPS en tant que trafic d'attaque de piratage en réponse à une réception d'un message de réponse renvoyé par l'expéditeur sur la base du message de sonde.

S101
Acquiring Hypertext Transfer Protocol Secure Traffic
S102
Extracting Target Features From The HTTPS Traffic Based On Positions Of Attack Characteristics In Hacking Attack Traffic
S103
Matching The Target Features Against First Genetic Features Corresponding To Hacking Tools Incorporated In In A Fingerprint Blacklist Database
Matched
Unmatched
S104
Identifying The HTTPS Traffic As Hacking Attack Traffic
S105
Matching The Target Features Against Second Genetic Features In A Tool Genetic Database To Obtain A Matching Result; Wherein The Second Genetic Features In The Tool Genetic Database Are Obtained By Combining The First Genetic Features Of Each Hacking Tool In The Fingerprint Blacklist Database
S106
Dentifying The HTTPs Traffic As Hacking Attack Traffic In Response To A Determination That The Matching Result Meets A Hacking Identification Condition

FIG. 1

201
Acquiring Unit
202
Traffic Identification Apparatus
Extracting Unit
203
204
First Matching Unit
Identifying Unit
205
Second Matching Unit

FIG. 2

Electronic Apparatus
Processor
301
302
304
Machine-readable Storage Medium
303
Communication Interface

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 114726579 B
- US 2022131885 A1
- CN 112583774 A